# EUROPEAN PATENT APPLICATION

(11) **EP 4 506 561 A1**
(43) Date of publication of application: **12.02.2025**
(21) Application number: 23190402.0
(22) Date of filing: 08.08.2023
(51) Int. Cl.: F03D 17/00

(54) **PRODUCTION LINES AND METHODS IN WIND TURBINE BLADE MANUFACTURE**

(71) Applicant: LM Wind Power A/S, 6000 Kolding (DK)
(72) Inventor: ROBERTS, David, Cerisiers Gaspe, QC G4X 2M1 (CA); BELOTE, Michael, Grand Forks, 58201 (US)
(74) Representative: Bardehle Pagenberg S.L.

(57) **Abstract**

The present disclosure relates to methods for inspecting assembled wind turbine blades. The methods comprise conveying the assembled wind turbine blades in a first direction such that the assembled wind turbine blade passes through one or more NDT workstations configured to carry out non-destructive testing. The methods further comprise inspecting the assembled wind turbine blade with non-destructive testing while the assembled wind turbine blade is being conveyed through the one or more NDT workstations.

## Description

### FIELD

The present disclosure relates to wind turbine blades and methods for manufacturing wind turbine blades. The present disclosure particularly relates to methods for inspecting assembled wind turbine blades in production lines.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

It is known to manufacture wind turbine blades where each of the wind turbine blades are molded and assembled at the same workshop. The wind turbine blade may then be moved to another workshop, typically a finishing workshop, where the wind turbine blade is cut, trimmed, painted and the final fittings are mounted on the wind turbine blade.

The wind turbine blades are often made of fiber-reinforced polymer and are usually manufactured as shell parts in molds, where the top side and the bottom side of the blade profile (typically the pressure side and suction side, respectively) are manufactured separately by arranging glass fiber mats in each of the two mold parts and injecting a liquid resin, which subsequently is cured. Afterwards, the two halves are glued together, often by means of internal flange parts. Glue is applied to the inner face of the lower blade half before the upper blade half is lowered thereon or *vice versa.* Additionally, one or two reinforcing profiles (beams) are often attached to the inside of the lower blade half prior to gluing to the upper blade half. A crane or hoisting assembly may be used to lift one of the mold parts about a hinge line for closure and opening of the molds.

Once the two halves are glued together, the resulting assembled wind turbine blade is inspected to check that the blade's internal features meet different specifications. Generally, different non-destructive testing sensors e.g. infrared sensors or ultrasound sensors are transported to where the assembled wind turbine is stored and qualified technicians analyze manually that the internal features of the wind turbine blade meet the different requirements. Usually, the assembled blade is oriented in a vertical direction, i.e. the leading edge faces the floor in order to carry out such NDT testing. The NDT process may be considered crucial for ensuring the obtention of a final wind turbine blade of quality and is very time consuming. After the blade has been inspected, the blade undergoes post processing.

So far, wind turbine production still relies on the above mentioned manufacturing methods involving highly skilled human labor. EP2403708 proposes an alternative manufacturing method and an alternative manufacturing line involving "moving molds". In this prior art document, a manufacturing line is disclosed, wherein wind turbine blades are formed in a number of molds, each of the molds comprising at least a first mold part comprising a first mold cavity. The manufacturing line further comprises a number of separate workstations, where separate manufacturing steps are carried out. And the method comprises the following steps: a) arranging the fiber reinforcement material in a first mold cavity of a first mold part at a first work station, b) moving the first mold part with the fiber reinforcement materials by use of conveying means to a second work station having a different position than the first work station, and c) supplying a curable matrix material into the first mold cavity of the first mold part at the second work station. Hereby, a method is provided whereby wind turbine blades can be manufactured using fewer resources e.g. molds and tools, or alternatively improving the throughput as the method increases the number of manufactured wind turbine blades per time unit compared to conventionally project oriented manufacturing methods.

Since the mold sets are movable in relation to the workstations, the method furthermore provides that each workstation can be equipped with specialized and advanced equipment that is dedicated to the manufacturing step carried out at each workstation, as the method reduces the required number of workstations. Additionally, each workstation can be manned with specialized workers that are skilled and trained in the manufacturing step carried out at that particular workstation. However, some of the workstations can also be automated, e.g. by using robots, such that fewer workers are needed. Automation is also expected to additionally improve the quality of the manufactured wind turbine blades.

The conveying means may comprise at least four wheels and/or rollers mounted on each of the number of molds, whereby the molds can easily be moved. The conveying means may also comprise rails or tracks on which the molds can be transported.

According to one example in the prior art, the method comprises the following step: d) moving the first mold part, while the matrix material is curing, by conveying means from the second workstation to a third workstation having a different position than the first and the second workstation. Hereby, the method reduces the manufacturing time, as the first mold is being moved from the second workstation to the third workstation while the matrix material that was infused in step b) is still curing. Further, in the third workstation step e) is performed, which comprises assembling the separate mold parts of the first mold and applying an adhesive between the shell parts.

According to the example in the prior art, the method further comprises a finalization line comprising a quality inspection station, a cut and trim station, a finish station and a painting station. The cut and trim station and the painting station can be automated.

The present disclosure provides examples of production lines and methods that provide improvements over prior art wind turbine blade manufacturing.

### SUMMARY

In an aspect of the present disclosure, a method for inspecting an assembled wind turbine blade comprising a first half shell and a second half shell joined at a leading edge and at a trailing edge is provided. The method comprises conveying the assembled wind turbine blade in a first direction relative to one or more NDT workstations configured to carry out Non-Destructive Testing such that the assembled wind turbine blade passes through the NDT workstations and inspecting the assembled wind turbine blade with Non-Destructive Testing while the assembled wind turbine blade passes through the one or more NDT workstations.

According to this aspect, the method may provide an automated inspection of an assembled wind turbine blade. The inspection may be done in a continuous manner, and the flow of production does not need to be interrupted. Further, rather than bringing multiple NDT sensors to the assembled blade, the blade is conveyed to a specialized NDT workstation. The inspection of an assembled blade may be more cost-effective and a more reliable inspection may be achieved in a reduced time.

The most critical joints may be formed at the "closing" of the mold, i.e. when the two half blade shells are joined together. The critical joints include the joint at the leading and at the trailing edge, but also e.g. between the blade shell and spars arranged inside the blade. NDT testing for a wind turbine blade in this automated manner is thus carried out for an already assembled blade.

As used throughout the present disclosure, a workstation may be regarded as a part of a production line, in which individual operations are carried out on a wind turbine blade or precursor of a blade, particularly a half shell of a blade. Some of the operations may be carried out by machines or "robots", although other operations may be carried out manually in some examples. A workstation may generally be regarded as an area of a factory floor, which is dedicated to a plurality of operations. Operations carried out at a workstation may be regarded as individual manufacturing steps.

Throughout the present disclosure, an NDT workstation may be regarded as a part of a production line in which Non-Destructive Testing is carried out. An NDT workstation may comprise one or more testing heads configured to carry out Non-Destructive Testing. The one or more testing heads may be located in one or more gantries.

Inspecting the assembled wind turbine blade with Non-Destructive Testing while the blade passes through the one or more NDT workstations may be understood as relating to inspecting the blade as the assembled wind turbine blade is moving relative to the one or more testing heads (which may be static or in motion), and to inspecting the blade as the gantries and the one or more testing heads are moving relative to the assembled wind turbine blade while the assembled wind turbine blade is in a stationary position in the one or more NDT workstations, and/or inspecting the blade as both the one or more gantries with the one or more testing heads and the assembled wind turbine blade are in motion, while moving relative to each other.

A blade passing through an NDT station may include a blade passing through / underneath a gantry with testing heads, but may also refer to a blade passing along a gantry with testing heads.

In yet a further aspect of the disclosure, a production line for manufacturing a wind turbine blade is provided. The production line comprises a first workstation, a second workstation, one or more molds for manufacturing one or more wind turbine blade half shells and a mold conveyor system for conveying the one or more molds from the first workstation to the second workstation. The production line further comprises one or more NDT workstations configured to carry out Non-Destructive testing and an assembled blade conveyor system for conveying an assembled wind turbine blade such that the assembled wind turbine blade passes through the one or more NDT workstations. The assembled wind turbine blade comprises a first half shell and a second half shell joined at a leading edge and at a trailing edge, and at least part of the first and second half shells is manufactured in the first and second workstations.

The herein described methods and systems are especially suitable for wind turbine blade manufacturing lines involving so-called moving mold systems as mentioned in the introduction.

As used throughout the present disclosure, a "production line", or "manufacturing line" may be regarded as a group of workstations which are generally arranged in the same geographical location i.e. at a manufacturing site such as a factory. The production line may in particular include an assembly of two half shells and the end product of the production line may be a finished blade, or almost finished blade (which only requires minor finishing operations).

After a blade (shell) has undergone the operations assigned to a specific workstation, the mold with shell may be discharged from the workstation, e.g. they may be conveyed to the next workstation. Each of the workstations may include one or more production tools. A workstation may also be regarded as a "cell" of a production line.

### BRIEF DESCRIPTION OF THE DRAWINGS

Figure 1 illustrates a perspective view of an example of a wind turbine;
Figure 2A illustrates a perspective view of an example of a wind turbine blade;
Figure 2B schematically illustrates an internal structure of a wind turbine blade;
Figure 2C is a schematic diagram illustrating a mold system for molding a blade shell of a wind turbine blade;
Figure 3 shows a flow chart of a method for inspecting an assembled wind turbine blade;
Figure 4 schematically illustrates an example of an NDT workstation; and
Figure 5 schematically illustrates an example of a production line for manufacturing a wind turbine blade.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

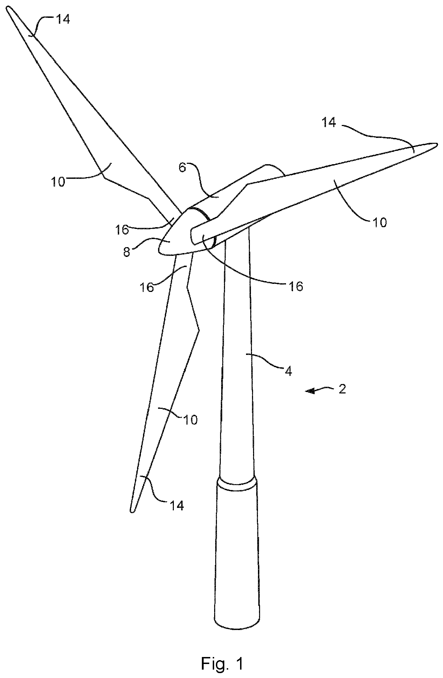

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

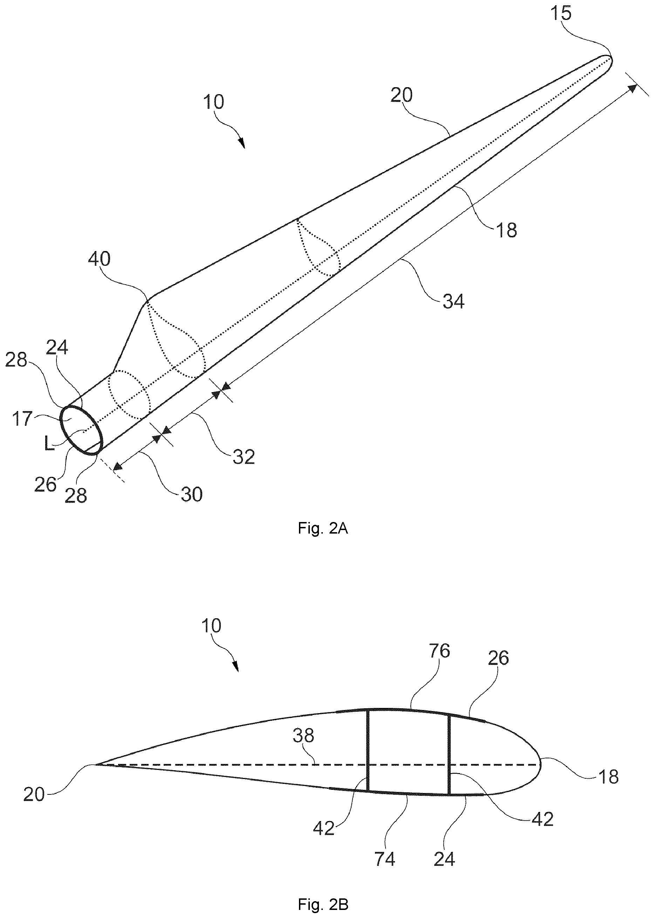

Fig. 2A shows a schematic view of an example of a wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 has a semi-circular or semi-oval outer cross-sectional shape.

Fig. 2B is a schematic diagram illustrating a cross sectional view of an example of a wind turbine blade 10, e.g. a cross-sectional view of the airfoil region of the wind turbine blade 10. The wind turbine blade 10 comprises a leading edge 18, a trailing edge 20, a pressure side 24, a suction side 26 a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

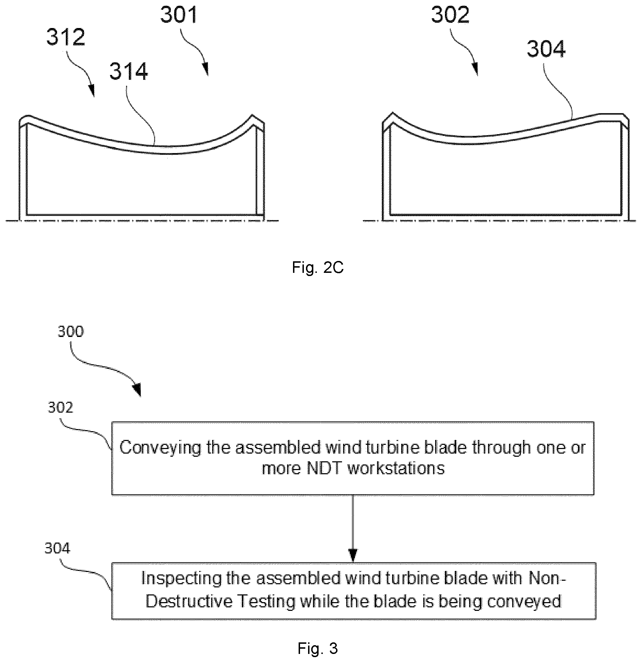

Fig. 2C is a schematic diagram illustrating an example of a mold system for molding a blade shell of a wind turbine blade. The mold system 301 comprises a first mold 302 and a second mold 312. The first mold 302 is configured for manufacturing a first blade shell part of a wind turbine blade, such as an upwind shell part of the wind turbine blade (forming the pressure side). The second mold 312 is configured for manufacturing a second blade shell part of the wind turbine blade, such as a downwind shell part of the wind turbine blade (forming the suction side). Surfaces 304 and 314 are mold surfaces for depositing fibers.

In an aspect of the present disclosure, a method 300 for inspecting an assembled wind turbine blade comprising a first half shell and a second half shell joined at a leading edge and at a trailing edge is provided.

Figure 3 shows a flowchart of the method 300. The method comprises at block 302 conveying the assembled wind turbine blade in a first direction relative to the NDT workstations such that the assembled wind turbine blade passes through one or more NDT workstations configured to carry out Non-Destructive Testing. The method further comprises at block 304 inspecting the assembled wind turbine blade with Non-Destructive Testing while the assembled wind turbine blade passes through the one or more NDT workstations. In particular, the method at block 302 may comprise conveying the assembled wind turbine blade in a first direction through the one or more NDT workstations and at block 304, the method may comprise inspected the assembled wind turbine blade while the blade is conveyed through the NDT stations.

The method may provide a more reliable inspection of an assembled wind turbine blade in a reduced time. The production flow is not interrupted, and the assembled blade may be inspected in an automated substantially continuous manner. Further, rather than bringing multiple NDT sensors to the assembled blade, the blade is conveyed to a specialized NDT workstation, making the method more cost-effective.

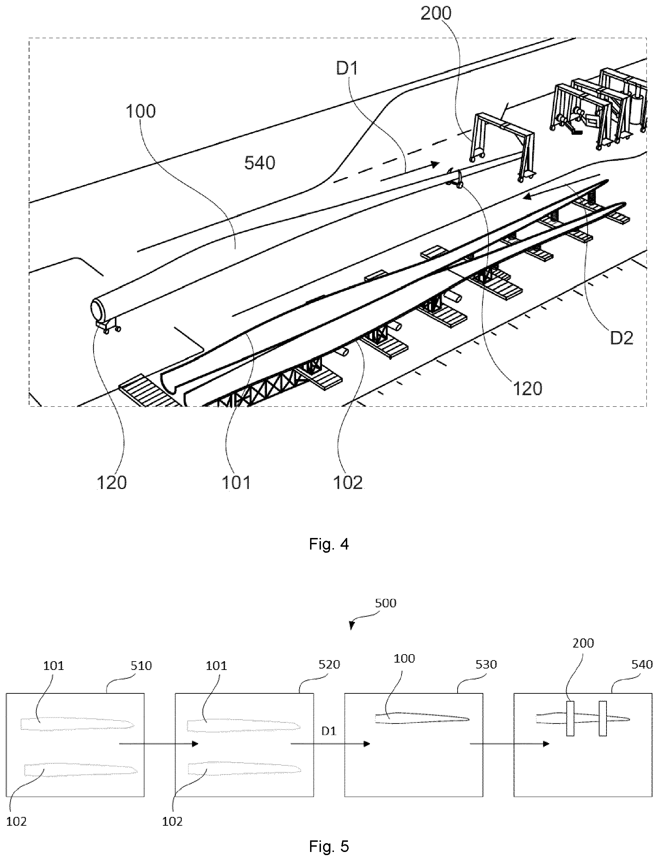

Various embodiments of the method for inspecting an assembled wind turbine blade are schematically illustrated in figures 4 and 5.

Figure 4 shows an example of an assembled wind turbine blade 100 being conveyed through an NDT workstation 540 in a first direction D1. The assembled wind turbine blade 100 comprises a first half shell and a second half shell joined at a leading edge and at a trailing edge.

In some examples, the assembled blade 100 may be conveyed at 10 - 14 meters / hour. Conveying the blade may comprise conveying the assembled wind turbine blade 100 in one of a mold or a cart. In examples, the assembled wind turbine blade 100 may be conveyed along one or more rails or other guides, e.g. the molds or carts or other conveyor comprises wheels or rollers configured to be displaced along the rails or other guides.

In some examples, as shown in figure 4, after the first half shell and the second half shell have been joined and an assembled wind turbine blade 100 has been obtained, the assembled wind turbine 100 may be demolded i.e. taken out from the molds 101, 102 and may be transferred to a suitable conveyor 120. The blade may be transferred to the conveyor using hoisting equipment such as one or more cranes.

In some examples, the conveyor 120 may comprise one or more carts with wheels and/or rollers. The carts may be configured to hold the assembled blade 100 in one or more holding points and convey it such that it passes through the one or more NDT workstations 540. In the example shown in figure 4, two carts are positioned at two different longitudinal positions of the blade.

In some examples, conveying the blade may comprise conveying the assembled wind turbine blade 100 such that the leading edge and the trailing edge are substantially at a same distance from the ground floor, i.e. the blade is arranged substantially horizontally. The assembled blade may therefore remain in the same position as it was when the first half shell and the second half shell were joined together and the transfer and positioning of the assembled blade from the mold to the conveyor may be simplified. Less resources and structures may be needed and the positioning of the assembled blade in or on the conveyor(s) may be done relatively quickly.

Additionally or alternatively, conveying the blade may comprise conveying the assembled wind turbine blade 100 with the trailing edge facing substantially upwards, i.e. the blade is arranged substantially vertically. Some inspections carried out by one or more of the testing heads may require the use of water e.g. ultrasound inspections. Impregnating and/or spraying the assembled wind turbine blade with water may be advantageously done when the blade is in this position.

In some examples, the conveyors may be configured to rotate the blade, such that the blade may be tested both in a horizontal and in a vertical orientation.

In other examples (not shown), the mold may be demolded and transferred to one or more conveyors arranged on guides e.g. on rails. The mold may be conveyed such that it passes through the one or more NDT workstations following a path of the rails. A conveying path may be strictly followed and deviations of the assembled blade with respect to the workstation may be avoided. Rails or other guides used in the conveying motion of the blade and/or the motion of elements in the NDT workstation may ensure that a predefined distance and orientation to the relevant testing heads is maintained, thereby improving the quality of testing.

In further examples (not shown), the assembled wind turbine blade 100 may not be demolded and one of the molds used for manufacturing the first or second half shells e.g. the mold used for manufacturing the half shell from underneath, may be used to convey the assembled wind turbine blade 100 through the one or more NDT workstations 540. In some examples, the mold may be arranged on top of a mold frame and the mold frame may be used to convey the assembled wind turbine blade 100. The mold frame may comprise wheels, skates, slides or rollers. In other examples, the mold frame may be configured to be conveyed along one or more guides e.g. rails.

In these examples, demolding the blade may be avoided and no additional conveyor may be needed in order to convey the assembled wind turbine blade such that it passes through the one or more NDT workstations.

An NDT workstation 540 may be regarded as a part of a production line where non-destructive testing is performed, i.e. the assembled wind turbine blade is inspected without being damaged.

Inspecting the assembled wind turbine blade may comprise monitoring internal features of the blade to assess whether the assembled blade meets safety and quality requirements. Features such as proper bonding between the shells and between the shells and the inner web or the presence of wrinkles in the inner fibers of the blade may be monitored.

In some examples, the Non-Destructive testing may include one or more of infrared scanning, phased array scanning, B-scanning (a type of ultrasound scanning), ultrasonic scanning and/or X-ray scanning. The terms ultrasound scanning and ultrasonic scanning may be used interchangeably throughout the present disclosure.

Different internal features of the blade may be monitored with these scanning techniques. Multiple of these techniques may be used simultaneously or sequentially as the assembled wind turbine blade passes through the NDT station.

In some examples, the curing of the resin may be checked with infrared scanning, which may be used to detect hot spots along the web to see if the resin is cured where the webs are attached to the shell. Infrared scanning may also be used in order to check whether the adhesive has been properly mixed.

Ultrasonic phased array scanning may be used to detect defects in the assembled wind turbine blade such as delamination between glass-reinforced plastic and carbon-reinforced plastic. Ultrasonic phased array scanning may also be used to detect wrinkles in the fibers and/or flawed bonding between the different blade materials.

Further, ultrasonic scanning and B-scanning may be used to monitor thickness of the assembled blade and whether the shell and the web have bonded in a correct manner or, on the contrary, if there is air trapped therein.

In some examples, X-ray scanning may be performed on the assembled blade to detect wrinkles in the fibers.

In some examples, the assembled blade 100 may be inspected while the blade is continuously moving through the one or more NDT workstations 420. The inspection may be automated and higher production yield may be provided. It may not be necessary to stop the assembled wind turbine blade within the NDT workstations, and a continuous and more efficient inspection may be provided. Movement of the blade through the NDT workstation allows improved integration in a moving mold production line.

In some examples, inspecting the assembled wind turbine blade may comprise inspecting the assembled wind turbine blade from an upper side, and/or a lower side and/or one or more lateral sides of the assembled wind turbine blade.

In some examples, the one or more NDT workstations 540 may comprise one or more testing heads, and inspecting the assembled wind turbine blade may comprise inspecting the blade with the one or more testing heads. The information obtained by the testing heads may be sent to a control system, which may be configured to assess whether the internal features of the assembled wind turbine blade 100 meet different requirements. In other examples, a specialized technician may analyze the data obtained by the testing heads. Such a control system may be any suitable data processing system which may involve automated expert systems i.e. computer programs which utilize data and models to make a diagnosis or indicate a potential quality flaw. In some cases, these systems may be based on Artificial Intelligence/ Machine Learning.

As shown in figure 4, the one or more NDT workstations 540 may comprise one or more gantries 200 comprising one or more testing heads. Throughout the present disclosure, a gantry may be understood as a framework which may be configured to support one or more testing heads. The gantries 200 may have different configurations which may be designed to facilitate access of the testing heads to different parts of the assembled wind turbine blade. In some examples, the gantries may comprise a cantilever beam configured to extend over the wind turbine blade. The cantilever beam may support one or more testing heads. In other examples, the gantries may be shaped as a portal. One or more testing heads may be arranged with the vertical and/or horizontal parts of such a portal. The gantries may provide access to at least a part of the surface of the assembled wind turbine e.g. an upper side and/or one or both lateral sides of the conveyed blade.

In some examples, the gantries 200 may be configured to maintain a clean environment and keep polluting particles such as dust away from the non-destructive testing area. In some examples, air curtains, physical curtains and/or devices capable of generating positive pressure within and/or in the vicinity of the gantries may be used.

In this particular example shown in figure 4, the gantries 200 may comprise a frame or portal comprising two legs. The frame may further comprise an upper transverse part substantially parallel to the floor of the workstation and connecting the two legs. The two legs are substantially perpendicular to the floor of the workstation in this example. The frame may define an inner space and the assembled wind turbine blade may be conveyed through the inner space of the frame i.e. the assembled wind turbine blade may be conveyed under the upper part of the frame and in between the two legs of the frame. Other configurations of the frame e.g. a frame defining an arch or including e.g. a single cantilever beam may also be used.

The one or more testing heads may be positioned at different positions throughout the frame of the gantry 200. In some examples, a gantry 200 may comprise one or more testing heads which may be configured to perform different tests. In other examples, the NDT workstation 420 may comprise a plurality of gantries 200 and each of the gantries may comprise one or more testing heads which may be dedicated to a single type of non-destructive inspection.

The one or more testing heads may comprise different characteristics depending on the type of scanning or testing that they are designed. In some examples, inspecting the blade with one or more testing heads may comprise inspecting the blade with stationary testing heads i.e. the testing heads may be fixedly attached to the frame of the gantry and may not be able to change their position.

In other examples, inspecting the blade with one or more testing heads may comprise inspecting the blade with movable testing heads. The testing heads may move along the frame of the gantry e.g. via a rail system or other guide system. The testing heads may move relative to the assembled wind turbine e.g. in a vertical direction. The legs of one or more of the gantries may incorporate such rails or guides. The testing heads may perform an upwards-downwards oscillatory movement and the blade passes through the gantry. For example, each upwards movement may take 20 seconds - 2 minutes, and each downwards movement may take a similar amount of time.

Additionally, or alternatively, such rails or guides may be arranged along the upper transverse part. The testing heads may move sideways as the blade passes through the gantry. The frequency of movement of the testing heads may be similar as for the upwards-downwards moving testing heads.

In some examples, testing heads may be positioned on a ground floor of the NDT workstation 540, such that when the assembled blade 100 is conveyed through the workstation, a lower side of the blade may be inspected with upwards facing testing heads. The ground floor may incorporate rails or guides as described before with respect to the gantry as well. In other examples, the gantries 200 may comprise testing heads configured to inspect a lower side of the blade.

In some examples, the gantries 200 may comprise, in addition to the testing heads, additional elements which may be needed in certain testing operations. In some examples, the gantries 200 may comprise spray heads for spraying water or other liquids e.g. such that ultrasonic scanning may be performed on the assembled blade.

In some examples, the method may comprise inspecting the assembled wind turbine blade 100 with stationary gantries 200. The one or more gantries 200 may stay in a fixed position in the NDT workstation 420 and the assembled wind turbine blade 100 may be conveyed towards them, and may pass through them.

The gantries 200 may be distributed throughout the NDT workstation e.g. 5 - 10 meters from each other. In other examples, the NDT workstation may comprise a single gantry extending e.g. 20 - 30 % the length of the assembled blade and comprising a plurality of testing heads configured to perform different types of scanning.

In other examples, the one or more gantries 200 may be configured to move or be transported e.g. wheels or rollers or may be configured to be conveyed along one or more guides. Inspecting the assembled wind turbine blade may comprise inspecting the assembled blade while the one or more gantries move in a second direction D2 opposite to the conveying first direction D1. Inspection of the wind turbine blade may be carried out faster without substantially increasing the conveying velocity of the assembled wind turbine blade. In yet further examples, the gantries may have an oscillatory movement, i.e. they may move contrary to the transport direction of the blade, and also move in the same transport direction of the blades. For example, a specific portion of the blade may require more extended inspection than other portions. By moving the gantry in the same direction as the blade, the testing head may focus on such a specific portion. When there are multiple gantries, these gantries may be moved independently from each other.

As schematically illustrated in figure 5, the one or more NDT workstations may be part of a production line 500 for manufacturing a wind turbine blade.

In a further aspect of the present disclosure, a production line 500 for manufacturing a wind turbine blade is disclosed.

The production line 500 for manufacturing a wind turbine blade comprises a first workstation 510, a second workstation 520 and one or more molds 101, 102 for manufacturing one or more wind turbine blade half shells. The production line 500 further comprises one or more NDT stations 540 configured to carry out Non-Destructive Testing and an assembled blade conveyor system for conveying an assembled wind turbine blade through the one or more NDT stations 540. The assembled wind turbine blade comprises a first half shell and a second half shell joined at a leading edge and at a trailing edge, and at least part of the first and second half shells is manufactured in the first and second workstations 510, 520.

An automated inspection of the assembled wind turbine blade may be achieved providing a high output without interrupting a flow of production. More reliable measurements of the internal features of assembled wind turbine blades may be obtained in a reduced time.

The first workstation 510 and the second workstation 520 may be upstream from the one or more NDT workstations 540. In this particular example, the production line 500 may comprise one NDT workstation 540. In other examples, the production line 500 may comprise two or more NDT workstations. The one or more NDT workstations may comprise one or more gantries 200 comprising one or more testing heads.

The first half shell and the second half shell of the assembled wind turbine blade 100 may be manufactured in molds comprising cavities which may define an outer surface of the first half shell and the second half shell.

In the first and second workstation 510, 520 of the production line 500, one or more steps for manufacturing a wind turbine blade half shell may be carried out. In particular, the manufacturing steps may comprise the supply of materials into one or more mold cavities. In some examples, the manufacturing steps may comprise applying gelcoat to an inside of the mold cavities, laying fiber reinforcement material in the mold cavities and/or infusing fibers laid in the mold cavities with a resin. It should be clear that one or only some of these steps may be carried out in a first workstation, whereas one or more manufacturing steps may be carried out in a subsequent workstation.

At least part of the first and second half shells may be manufactured in the first and second workstations 510, 520. In some examples, a manufacturing process of the first half shell and the second half shell of the assembled wind turbine blade 100 may comprise conveying a first and second molds 101, 102 for manufacturing a wind turbine blade half shell from a first workstation 510 to a second workstation 520. The first and second molds 101, 102 may be conveyed from the first workstation 510 to the second workstation 520 together e.g. at a same time or separately e.g. at a different time. In the example illustrated in figure 5, the first and second molds are conveyed at a same time from the first workstation 510 to the second workstation 520.

A mold conveyor system may convey the first and second molds 101, 102 from the first station 510 to the second station 520. In some examples, the mold conveyor system may comprise rails or tracks on which the molds can be transported. In other examples, the mold conveyor system may comprise at least four wheels and/or rollers mounted on each of the molds or mold frames supporting the molds.

As shown in the example of figure 5, the production line 500 for manufacturing a wind turbine blade may comprise a closing workstation 530 downstream the first and second workstations 510, 520 and upstream the one or more NDT workstations 540.

The manufacturing process of the first half shell and the second half shell may further comprise conveying the first and second molds 101, 102 to the closing workstation 530 and joining at the leading edge and at the trailing edge the first half shell and the second half shell in the molds, therefore forming the assembled wind turbine blade 100. The assembled wind turbine blade 100 may be inspected through non-destructive testing in a further step.

In further examples, the production line 500 may comprise a third workstation and the mold conveyor system may be configured to move the first and second molds 101, 102 from the second workstation 520 to the third workstation. In such examples, the first workstation 510 may be a gelcoat station, the second workstation 520 may be a fiber lay-up station and the third workstation may be a resin infusion station. The first and second mold 101, 102 may be moved from the third workstation to the closing workstation 530.

In some examples, the assembled wind turbine blade 100 may be conveyed from the closing workstation 530 of the production line 500 such that it passes through one or more NDT workstations 540 configured to carry out non-destructive testing. In other examples, intermediate workstations may be arranged between the closing workstation and the NDT workstation(s).

In some examples, after NDT inspection of the assembled wind turbine blade, the blade may be conveyed to a finishing workstation, where some final operations may be performed to the blade. In some examples, the blade may be trimmed, grinded and/or painted and final fittings e.g. lightning connectors and/ or bulkheads may be installed on the wind turbine blade. In other examples, flaws detected during the NDT inspection may be taken care of. In these examples, the assembled blade may then be conveyed through another NDT workstation so it may be ensured that all the internal technical features of the blade meet their requirements.

In some examples, in a final step of the production line, the assembled wind turbine blade may be weighted, balanced and shipped.

For reasons of completeness, various aspects of the present disclosure are set out in the following numbered clauses:
Clause 1. A method (300) for inspecting an assembled wind turbine blade (100) comprising a first half shell and a second half shell joined at a leading edge and at a trailing edge, the method comprising:
   conveying the assembled wind turbine blade (100) in a first direction (D1) relative to one or more NDT workstations (540) configured to carry out Non-Destructive Testing such that the assembled wind turbine blade (100) passes through the NDT workstations (540); and
   inspecting the assembled wind turbine blade (100) with Non-Destructive Testing while the assembled wind turbine blade (100) passes through the one or more NDT workstations (540).
Clause 2. The method (300) of clause 1, wherein a manufacturing process of the first half shell and the second half shell takes place prior to inspecting the assembled wind turbine blade, and the manufacturing process comprises conveying a first and second molds (101, 102) for manufacturing a wind turbine blade half shell from a first workstation (510) to a second workstation (520).
Clause 3. The method (300) of clause 2, further comprising, prior to inspecting the assembled wind turbine blade, conveying the first and second molds (101, 102) to a closing workstation (530) and joining the first half shell and the second half shell at the leading edge and at the trailing edge at the closing workstation (530) and forming the assembled wind turbine blade (100).
Clause 4. The method (300) of clause 1 - 3, wherein the assembled wind turbine blade (100) is inspected while the blade is moving through the one or more NDT workstations (540).
Clause 5. The method (300) of any of clauses 1 - 4, wherein inspecting the assembled wind turbine blade comprises inspecting the assembled wind turbine blade from at least an upper side, a lower side and/or a lateral side of the assembled wind turbine blade.
Clause 6. The method (300) of any of clauses 1 - 5, wherein the one or more NDT workstations (540) comprise one or more testing heads, and wherein inspecting the assembled wind turbine blade (100) comprises inspecting the blade with the one or more testing heads.
Clause 7. The method (300) of clause 6, wherein inspecting the blade with one or more testing heads comprises inspecting the blade with stationary testing heads.
Clause 8. The method (300) of clause 6, wherein inspecting the blade with one or more testing heads comprises inspecting the blade with movable testing heads.
Clause 9. The method (300) of any of clauses 1 - 8, wherein the one or more NDT workstations (540) are part of a production line (500) for manufacturing a wind turbine blade.
Clause 10. The method (300) of any of clauses 1 - 9, wherein the one or more NDT workstations (540) comprise one or more gantries (200) comprising one or more testing heads.
Clause 11. The method (300) of clause 10, wherein inspecting the assembled wind turbine blade (100) comprises inspecting the assembled wind turbine blade with stationary gantries.
Clause 12. The method (300) of clause 10 or 11, wherein inspecting the assembled wind turbine blade (100) comprises inspecting the assembled wind turbine blade while the one or more gantries (200) move in a second direction (D2) opposite to the conveying first direction (D1).
Clause 13. The method (300) of any of clauses 1 - 12, wherein the Non-Destructive Testing includes one or more of infrared scanning, phased array scanning, B-scanning, ultrasonic scanning and/or X-ray scanning.
Clause 14. The method (300) of any of clauses 1 - 13, wherein conveying the blade comprises conveying the assembled wind turbine blade (100) in one of a mold and/or cart.
Clause 15. The method (300) of any of claims 1 - 13, wherein conveying the blade comprises conveying the assembled wind turbine blade along one or more guides.
Clause 16. The method (300) of any of clauses 1 - 15, wherein conveying the blade comprises conveying the assembled wind turbine blade such that a leading edge and a trailing edge of the assembled wind turbine blade are substantially at a same distance from a ground floor.
Clause 17. The method (300) of any of clauses 1 - 15, wherein conveying the blade comprises conveying the assembled wind turbine blade with the trailing edge facing substantially upwards.
Clause 18. A production line (500) for manufacturing a wind turbine blade, the production line comprising:
   a first workstation (510);
   a second workstation (520);
   one or more molds (101, 102) for manufacturing one or more wind turbine blade half shells;
   a mold conveyor system for conveying the one or more molds (101, 102) from the first workstation (510) to the second workstation (520);
   one or more NDT workstations (540) configured to carry out Non-Destructive testing; and
   an assembled blade conveyor system for conveying an assembled wind turbine blade (100) such that the assembled wind turbine blade (100) passes through the one or more NDT workstations (540), wherein
   the assembled wind turbine blade (100) comprises a first half shell and a second half shell joined at a leading edge and at a trailing edge, and wherein at least part of the first and second half shells is manufactured in the first and second workstations (510, 520).
Clause 19. The production line (500) of clause 18, wherein the one or more NDT workstations (540) are configured to inspect the assembled wind turbine blade (100) while the blade is moving through the one or more NDT workstations (540).
Clause 20. The production line (500) of any of clauses 18 - 19, wherein the first station (510) and/ or the second station (520) comprise one of a gelcoat station, a fiber lay-up station, a resin infusion station and a closing workstation.
Clause 21. The production line (500) of any of clauses 18 - 20, further comprising a closing workstation (530) for joining at the leading edge and trailing edge the first and second half shells and forming an assembled wind turbine blade (100).
Clause 22. The production line (500) of clause 21, further comprising a third workstation, and wherein the mold conveyor system is configured to move the one or more molds (101, 102) from the second workstation (520) to the third workstation, and from the third workstation to the closing workstation (530).
Clause 23. The production line (500) of any of clauses 18 - 22, wherein the one or more NDT workstations (540) comprise one or more gantries (200) comprising one or more testing heads.
Clause 24. The production line of any of clauses 18 - 23, comprising multiple gantries having one or more testing head, and wherein the multiple gantries are configured to be displaced independently from each other.
Clause 25. The production line of any of clauses 18 - 24, wherein the NDT workstations include one or more of air curtains, or physical curtains.
Clause 26. The production line of clause 25, wherein a positive pressure is generated in one or more of the NDT workstations.
Clause 27. The production line (500) of any of clauses 18 - 26, wherein the Non-Destructive Testing includes one or more of infrared scanning, phased array scanning, B-scanning, ultrasonic scanning and/or X-ray scanning.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (300) for inspecting an assembled wind turbine blade (100) comprising a first half shell and a second half shell joined at a leading edge and at a trailing edge, the method comprising:
conveying the assembled wind turbine blade (100) in a first direction (D1) relative to one or more NDT workstations (540) configured to carry out Non-Destructive Testing such that the assembled wind turbine blade passes through the NDT workstations; and
inspecting the assembled wind turbine blade (100) with Non-Destructive Testing while the assembled wind turbine blade (100) passes through the NDT workstations (540).

2. The method (300) of claim 1, wherein a manufacturing process of the first half shell and the second half shell takes place prior to inspecting the assembled wind turbine blade, and the manufacturing process comprises conveying a first and a second mold (101, 102) for manufacturing a wind turbine blade half shell from a first workstation (510) to a second workstation (520).

3. The method (300) of claim 2, further comprising, prior to inspecting the assembled wind turbine blade, conveying the first and second molds (101, 102) to a closing workstation (530) and joining the first half shell and the second half shell at the leading edge and at the trailing edge at the closing workstation (530) and forming the assembled wind turbine blade (100).

4. The method (300) of any of claims 1 - 3, wherein the one or more NDT workstations (540) comprise one or more testing heads, and wherein inspecting the assembled wind turbine blade (100) comprises inspecting the blade with the one or more testing heads.

5. The method (300) of claim 4, wherein the NDT workstations (540) comprise one or more gantries (200) comprising one or more testing heads.

6. The method (300) of claim 5, wherein inspecting the assembled wind turbine blade (100) comprises inspecting the assembled wind turbine blade with stationary gantries.

7. The method (300) of claim 5 or 6, wherein inspecting the assembled wind turbine blade (100) comprises inspecting the assembled wind turbine blade while the gantries (200) move in a second direction (D2) opposite to the conveying first direction (D1).

8. The method (300) of any of claims 1 - 7, wherein the Non-Destructive Testing includes one or more of infrared scanning, phased array scanning, B-scanning, ultrasonic scanning and/or X-ray scanning.

9. The method (300) of any of claims 1 - 8, wherein conveying the assembled wind turbine blade comprises conveying the assembled wind turbine blade such that a leading edge and a trailing edge of the assembled wind turbine blade are substantially at a same distance from a ground floor.

10. The method (300) of any of claims 1 - 8, wherein conveying the assembled wind turbine blade comprises conveying the assembled wind turbine blade with the trailing edge facing substantially upwards.

11. A production line (500) for manufacturing a wind turbine blade, the production line comprising:
a first workstation (510);
a second workstation (520);
one or more molds (101, 102) for manufacturing one or more wind turbine blade half shells;
a mold conveyor system for conveying the one or more molds (101, 102) from the first workstation (510) to the second workstation (520);
one or more NDT workstations (540) configured to carry out Non-Destructive testing;
and
an assembled blade conveyor system for conveying an assembled wind turbine blade (100) through the NDT workstations (540), wherein
the assembled wind turbine blade (100) comprises a first half shell and a second half shell joined at a leading edge and at a trailing edge, and wherein at least part of the first and second half shells is manufactured in the first and second workstations (510, 520).

12. The production line (500) of claim 11, wherein the first station (510) and/ or the second station (520) comprise one of a gelcoat station, a fiber lay-up station, a resin infusion station and a closing workstation.

13. The production line (500) of any of claims 11 - 12, further comprising a closing workstation (530) for joining at the leading edge and trailing edge the first and second half shells and forming an assembled wind turbine blade (100).

14. The production line (500) of any of claims 11 - 13, wherein the NDT workstations (540) comprise one or more gantries (200) comprising one or more testing heads.

15. The production line (500) of any of claims 11 - 14, wherein the Non-Destructive Testing includes one or more of infrared scanning, phased array scanning, B-scanning, ultrasonic scanning and/or X-ray scanning.
